Europäisches Patentamt

European Patent Office

Office européen des brevets

(11) Veröffentlichungsnummer: **0 344 472**

**A1**

(12) # EUROPÄISCHE PATENTANMELDUNG

(21) Anmeldenummer: **89107828.9**

(22) Anmeldetag: **29.04.89**

(51) Int. Cl.4: **D01H 1/244 , B65H 54/74 , H02K 1/18**

(30) Priorität: **28.05.88 DE 3818195**

(43) Veröffentlichungstag der Anmeldung:
**06.12.89 Patentblatt 89/49**

(84) Benannte Vertragsstaaten:
**AT CH DE FR IT LI**

(71) Anmelder: **ASEA BROWN BOVERI AG**
**Haselstrasse**
**CH-5401 Baden(CH)**

Anmelder: **Zinser Textilmaschinen GmbH**
**Hans-Zinser-Strasse Postfach 1480**
**D-7333 Ebersbach/Fils(DE)**

(72) Erfinder: **Wolf, Horst Dipl.-Ing.**
**Neuffenstrasse 8**
**D-7321 Albershausen(DE)**
Erfinder: **Hildbrand, Hans-Peter**
**In den Dorfmatten 21**
**CH-5612 Villmergen(CH)**
Erfinder: **Fricker, David**
**Langäckerstrasse 26**
**CH-8957 Spreitenbach(CH)**

(74) Vertreter: **Wilhelm & Dauster Patentanwälte**
**European Patent Attorneys**
**Hospitalstrasse 8**
**D-7000 Stuttgart 1(DE)**

(54) **Spindeln mit elektromotorischem Einzelantrieb für eine Spinnereimaschine.**

(57) Bei Spindeln mit elektromotorischem Einzelantrieb für eine Spinnereimaschine, die in einer Reihe nebeneinander an einer Spindelbank angebracht sind wird vorgesehen, daß die Blechpakete der Statoren, die mit den Lagergehäusen der Spindeln drehfest verbunden sind, jeweils eine quaderförmige Außenkontur aufweisen und Bleche mit im wesentlichen quadratischer Grundfläche enthalten, die im Bereich ihrer Ecken mit Säulen gehalten sind, die an einer Platte angebracht sind, die drehfest mit dem Lagergehäuse verbunden ist.

Fig.1

## Spindeln mit elektromotorischem Einzelantrieb für eine Spinnereimaschine

Die Erfindung betrifft Spindeln mit elektromotorischem Einzelantrieb für eine Spinnereimaschine, die in einer Reihe nebeneinander an einer Spindelbank angebracht sind und die jeweils einen in einem Lagergehäuse gelagerten Schaft aufweisen, der drehfest mit einem Rotor verbunden ist, dessen zugehöriger Stator drehfest mit dem in der Spindelbank gehaltenen Lagergehäuse verbunden ist und der ein Blechpaket enthält.

Insbesondere um eine höhere Produktivität bei einer Reduzierung des Energieverbrauches und bei gleichzeitiger Verringerung des Geräuschpegels zu erreichen, ist es bekannt geworden, Spindeln mit elektromotorischem Einzelantrieb vorzusehen.

Der Erfindung liegt die Aufgabe zugrunde, die Spindel mit ihrem elektromotorischen Einzelantrieb so auszubilden, daß eine möglichst kleine Maschinenteilung erhalten wird.

Diese Aufgabe wird dadurch gelöst, daß die Blechpakete der Statoren jeweils eine quaderförmige Außenkontur aufweisen und Bleche mit im wesentlichen quadratischer Grundfläche enthalten, die im Bereich ihrer Ecken mit Säulen gehalten sind, die an einer Platte angebracht sind, die drehfest mit dem Lagergehäuse verbunden ist.

Insbesondere in Verbindung mit dem Ringspinnen ist es besonders wirtschaftlich, wenn mit hohen Spindeldrehzahlen gearbeitet wird. Diese hohen Spindeldrehzahlen lassen sich jedoch nur mit relativ kleinen Kopsen bezüglich der Lager beherrschen. Um bei dem Bau der Maschine nicht unnötig den Platzbedarf zu vergrößern, ist es deshalb sinnvoll, mit einer möglichst kleinen Spindelteilung auszukommen. Aufgrund der quaderförmigen Ausbildung der Blechpakete mit in ihrer Grundfläche quadratischen Blechen wird erreicht, daß nicht aufgrund des Stators die Spindelteilung größer als notwendig gemacht werden muß. Die einzelnen Bleche haben eine ausreichend große magnetisch aktive geschlossene Ringfläche, die nicht durch Befestigungsmittel oder Halteelemente unterbrochen ist. Diese Befestigungs- und Haltemittel sind vielmehr in den Ecken der Bleche angebracht, d.h. in dem magnetisch wenig belasteten Bereich. Dadurch wird es möglich, die Abmessungen des Blechpaketes in einer Richtung auf das physikalisch notwendige Mindestmaß zu beschränken, d.h. in Längsrichtung der Maschine, in welcher auch die Spindelteilung gemessen wird.

In weiterer Ausgestaltung der Erfindung wird vorgesehen, daß die Außenflächen der Blechpakete im Bereich zwischen den Säulen freiliegen. Durch einen Verzicht auf ein Außengehäuse wird einerseits eine gute Kühlung gewährleistet, während andererseits der Platzbedarf noch einmal verringert wird.

In weiterer Ausgestaltung der Erfindung wird vorgesehen, daß die Säulen jeweils an das zugehörige zusammengepreßte Blechpaket angegossen sind. Dadurch läßt sich eine kostengünstige Herstellung gewährleisten. Dabei ist es vorteilhaft, daß in weiterer Ausgestaltung der Erfindung die Bleche der Blechpakete im Bereich ihrer Ecken mit einem Verankerungsprofil versehen sind, das in die Säulen eingegossen ist. Dadurch wird eine sehr feste Verbindung zwischen den Säulen und den Blechen des Blechpaketes hergestellt.

In weiterer Ausgestaltung der Erfindung wird vorgesehen, daß die Bleche der einzelnen Blechpakete im Bereich der Ecken durch vorzugsweise beim Stanzen angebrachte Einprägungen miteinander verbunden sind. Dadurch wird das Blechpaket bei seiner Herstellung bereits so zu einer Baueinheit zusammengepreßt, daß es als solches handhabbar und transportierbar ist.

Weitere Merkmale und Vorteile der Erfindung ergeben sich aus der nachfolgenden Beschreibung des in der Zeichnung dargestellten Ausführungsbeispiels.

Fig. 1 zeigt einen Axialschnitt durch eine erfindungsgemäße Spindel, wobei die linke Seite und die rechte Seite der Fig. 1 jeweils um 135° versetzte Schnittebenen sind,

Fig. 2 eine Draufsicht auf die mit Säulen versehene Blechpakete von zwei nebeneinander angeordneten Spindeln,

Fig. 3 einen Schnitt entlang der Linie III-III der Fig. 2 und

Fig. 4 einen Teilschnitt entlang der Linie IV-IV der Fig. 3.

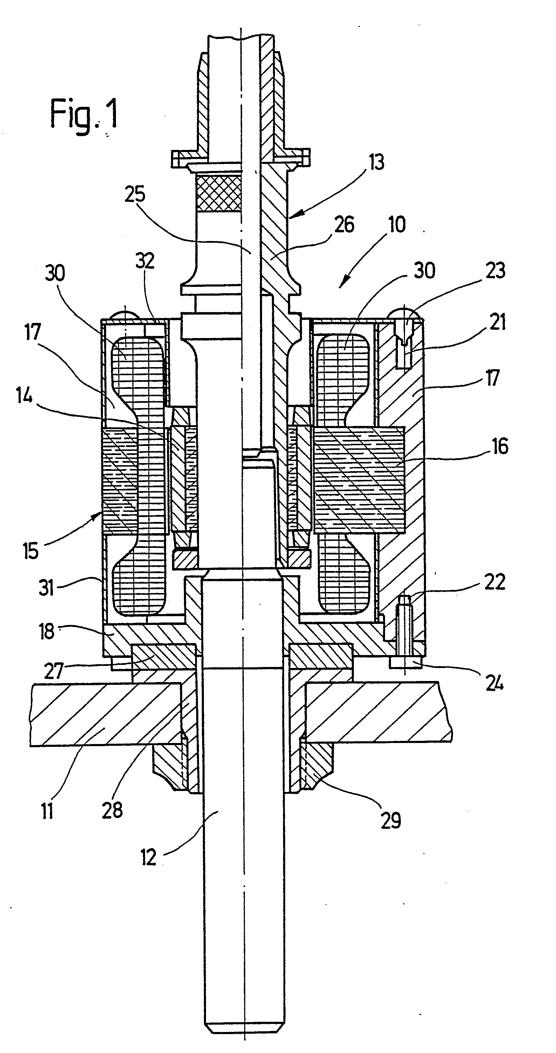

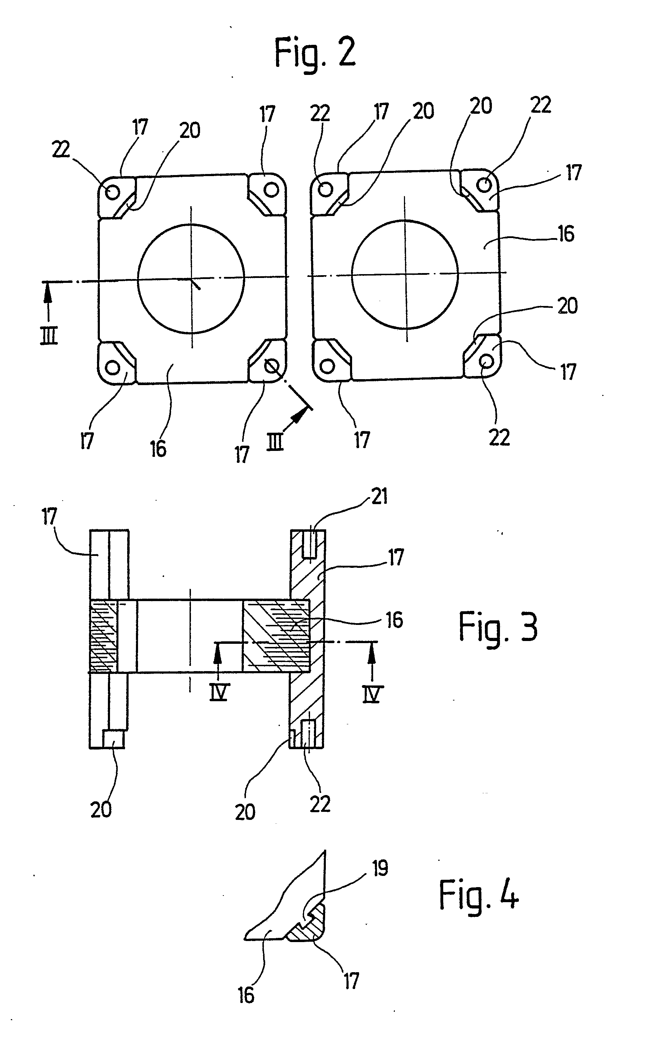

Fig. 1 zeigt einen Axialschnitt durch eine Spindel, wobei die Schnittebene entlang der Linie III-III der Fig. 2 verläuft, d.h. in einem Winkel von 135°.

Die Spindel (10) enthält ein Lagergehäuse (12), in welchem ein mehrteiliger Spindelschaft (13) mittels eines nicht dargestellten Halslagers und eines Fußlagers gelagert ist. Der Spindelschaft (13) besitzt einen in das Lagergehäuse (12) eindringenden Teil (25) und einen diesen außen glockenartig übergreifenden Teil (26), auf den eine Hülse eines Spinnkops o.dgl. aufsteckbar ist.

An dem topfartigen Teil (26) ist drehfest ein in üblicher Weise aufgebauter Rotor (14) eines Elektromotors angebracht, insbe sondere eines Asynchronmotors, der aus einem Blechpaket und einem Käfig gebildet ist.

Dem Rotor (14) ist ein Stator (15) zugeordnet, der über eine Platte (18) drehfest mit dem Lagergehäuse (12) verbunden ist. Die Platte (18) ist über ein dämpfendes Zwischenlager (27) mit einer Hülse (28) verbunden, die eine Spindelbank (11) durchdringt und die mittels einer Mutter (29) an der Spindelbank (11) gehalten ist.

Der Stator (15) besteht aus einem Blechpaket (16), das mit Nuten für Wicklungen (30) versehen ist. Der linke Schnitt der Fig. 1 ist durch eine Nut und eine Wicklung (30) geführt.

Wie insbesondere aus Fig. 2 zu ersehen ist, besitzt das Blechpaket (16) eine quaderförmige Gestalt und ist aus einzelnen im wesentlichen quadratischen Blechplatten zusammengesetzt. Diese Blechplatten werden aus einem Blech ausgestanzt, wobei ein gitterloses Stanzen durchgeführt werden kann. Bei dem Stanzen werden mehrere Bleche gleichzeitig übereinanderliegend ausgestanzt, die auch gleichzeitig zu einem Blechpaket miteinander verpreßt werden, wobei Einprägungen in die Einzelbleche eingedrückt werden, die ineinander greifen. Dadurch erhält das Blechpaket einen Zusammenhalt, so daß es als solches handhabbar und transportierbar ist.

Jedes der Blechpakete (16) wird an den vier Ecken der quadratischen Grundflächen durch Säulen (17) gehalten und zusammengehalten, die die Grundfläche der Bleche zu einem fast vollständigen Quadrat ergänzen.

Die Säulen (17) werden an die Blechpakete (16) angegossen, die hierzu während des Gießens auf einem Dorn gehalten werden. Bevorzugt werden die Säulen aus Aluminiumdruckguß ausgeführt. Es ist jedoch auch möglich, die Säulen aus einem faserverstärkten Kunststoff zu gießen, insbesondere aus einem mit Graphitfasern verstärkten Kunststoff. Wie aus Fig. 1, 2 und 3 zu ersehen ist, befinden sich die Säulen (17) lediglich in den Ecken, so daß das Blechpaket (16) in dem dazwischenliegenden Bereich mit seiner Außenfläche völlig frei liegt.

Die Säulen (17) sind jeweils an ihrem unteren Ende mit einer auf einem gemeinsamen Kreis liegenden, stufenartigen Profilierung (20) versehen, mit der sie an einer ringförmigen Stufe der Platte (18) zentriert werden. Die Säulen (17) sind mit Schrauben (24) an der Platte (18) befestigt, die in die stirnseitigen Enden der Säulen (17) eingeschraubt sind. Die Säulen (17) sind mit entsprechenden Gewindebohrungen (22) versehen. Zwischen der Platte (18) und dem Blechpaket (16) ist eine Kunststoffhülse (31) eingespannt, die die Wicklung (30) in dem unteren Bereich schützt. Der obere Bereich der Wicklung (30) ist mit einer Kappe (32) umgeben, die an den Stirnenden der Säulen (17) mittels Nieten (23) befestigt sind, die in stirnseitige Aussparungen (21) der Säulen (17) eingesetzt sind.

Wie insbesondere aus Fig. 3 und 4 zu ersehen ist, sind die Bleche des Blechpaketes (16) mit den Säulen (17) verankert. Hierzu sind die Eckbereiche der Bleche des Blechpaketes (16) derart ausgeschnitten, daß ein schwalbenschwanzförmiges Verankerungsprofil (19) entsteht, welches von den Säulen (17) beim Gießen umgossen wird.

Wie aus Fig. 2 ersichtlich ist, sind die Spindeln (10) derart angeordnet, daß die Außenflächen der Blechpakete (16) paarweise miteinander fluchten und paarweise miteinander parallel verlaufen. Die einzelnen Bleche bieten eine ungestörte Ringfläche für den Magnetfluß, die annähernd dem Teilungsabstand zwischen zwei benachbarten Spindeln entspricht, d.h. dem Teilungsabstand abzüglich eines Sicherheitsabstandes. Die ungestörte Ringfläche, die um die die quadratische Grundfläche bildenden Ecken vergrößert ist, ist auf den für einen Magnetfluß notwendigen kleinsten Durchmesser ausgelegt.

Es ist möglich, von dem Ideal der quadratischen Grundfläche für die Bleche der Blechpakete (16) etwas abzuweichen, wobei darauf geachtet werden soll, daß die Befestigungsflächen außerhalb der für einen Magnetfluß benötigten ungestörten Ringfläche liegen.

## Ansprüche

1. Spindeln mit elektromotorischem Einzelantrieb für eine Spinnereimaschine, die in einer Reihe nebeneinander an einer Spindelbank angebracht sind und die jeweils einen in einem Lagergehäuse gelagerten Schaft aufweisen, der drehfest mit einem Rotor verbunden ist, dessen zugehöriger Stator drehfest mit dem in der Spindelbank gehaltenen Lagergehäuse verbunden ist und der ein Blechpaket enthält, dadurch gekennzeichnet, daß die Blechpakete (16) der Statoren (15) jeweils eine quaderförmige Außenkontur aufweisen und Bleche mit im wesentlichen quadratischer Grundfläche enthalten, die im Bereich ihrer Ecken mit Säulen (17) gehalten sind, die an einer Platte (18) angebracht sind, die drehfest mit dem Lagergehäuse (12) verbunden ist.

2. Spindeln nach Anspruch 1, dadurch gekennzeichnet, daß die Außenflächen der Blechpakete (16) im Bereich zwischen den Säulen (17) freiliegen.

3. Spindeln nach Anspruch 1 oder 2, dadurch gekennzeichnet, daß die Säulen (17) jeweils an das zugehörige, zusammengepreßte Blechpaket (16) angegossen sind.

4. Spindeln nach einem der Ansprüche 1 bis 3, dadurch gekennzeichnet, daß die Bleche der Blechpakete (16) im Bereich ihrer Ecken mit einem Verankerungsprofil (19) versehen sind, das in die Säulen (17) eingegossen ist.

5. Spindeln nach einem der Ansprüche 1 bis 4, dadurch gekennzeichnet, daß die Bleche der Blechpakete (16) im Bereich der Ecken durch vorzugsweise beim Stanzen angebrachte Einprägungen miteinander verbunden sind.

6. Spindeln nach einem der Ansprüche 1 bis 5, dadurch gekennzeichnet, daß die Säulen (17) jedes Blechpaketes (16) mit auf einer gemeinsamen Kreisflächen liegenden, stufenartigen Profilierungen (20) versehen sind, mit denen sie an der zugehörigen Platte (18) zentriert sind.

7. Spindeln nach einem der Ansprüche 1 bis 6, dadurch gekennzeichnet, daß die Säulen (17) an wenigstens einem Stirnende mit vorzugsweise eingeformten Aufnahmen (21, 22) für Befestigungsmittel (23, 24) versehen sind.

Fig.1

# Fig. 2

# Fig. 3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C-3336577 (SKF KUGELLAGERFABRIKEN GMBH) <br> * Anspruch 1 * <br> ---- | 1, 2, 6, 7 | D01H1/244 <br> B65H54/74 <br> H02K1/18 |
| Y | US-A-1771475 (E.M.WRIGHT) <br> * Seite 1, Zeile 42 - Zeile 89; Figuren 1-5 * <br> ---- | 1, 2, 6, 7 | |
| A | Gemeinschaftszeitschrift Elektro-Technik und Elektrotechnischer_Anzeig <br> no. 6, 18 September 1943, Pössneck <br> "Technischer Fortschritt" <br> * Seite 28, Spalte 1, Zeile 1 - Zeile 21; Figuren 1-3 * <br> --- | 3 | |
| A | US-A-3844024 (C.W.OTTO) <br> * Spalte 3, Zeile 19 - Zeile 32; Figuren 1-3 * <br> --- | 4 | |
| A | GB-A-1132832 (EMERSON ELECTRIC CO) <br> ----- | | |

RECHERCHIERTE
SACHGEBIETE (Int. Cl.4)

D01H
B65H
H02K

Der vorliegende Recherchenbericht wurde für alle Patentansprüche erstellt

| Recherchenort | Abschlußdatum der Recherche | Prüfer |
|---|---|---|
| DEN HAAG | 18 AUGUST 1989 | HOEFER W.D. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

   ................................................................................................
& : Mitglied der gleichen Patentfamilie, übereinstimmendes
   Dokument

EPO FORM 1503 03.82 (P0403)